# EUROPÄISCHE PATENTSCHRIFT

(11) **EP 2 939 870 B1**
(45) Veröffentlichungstag und Bekanntmachung des Hinweises auf die Patenterteilung: **27.03.2019**
(21) Anmeldenummer: 15165263.3
(22) Anmeldetag: 27.04.2015
(51) Int. Cl.: B60N 2/015, B60N 2/30

(54) **SITZBEFESTIGUNG FÜR EINEN FAHRZEUGSITZ**
SEAT ATTACHMENT FOR A VEHICLE SEAT
FIXATION DE SIÈGE POUR UN SIÈGE DE VÉHICULE

(30) Priorität: 30.04.2014 DE 102014208142
(43) Veröffentlichungstag der Anmeldung: 04.11.2015
(73) Patentinhaber: Volkswagen Aktiengesellschaft, 38440 Wolfsburg (DE)
(72) Erfinder: Gießmann, Stephan, 38458 Velpke (DE)

(56) Entgegenhaltungen:
- JP-A- H07 266 950
- US-A- 5 498 051
- US-A1- 2003 193 228
- US-A1- 2005 236 883

## Beschreibung

Die Erfindung betrifft eine Sitzbefestigung für einen Fahrzeugsitz.

Die Druckschrift DE 420 4712 C2 beschreibt einen Fahrzeugsitz, dessen Gestell hinten im Fahrzeugboden verankert ist, wenn der Sitz in Gebrauchsstellung steht, und vorne unten jeweils zwei Aussparungen aufweist, die zwei im Boden verankerte Stangen aufnehmen und so eine Querachse für den Sitz bilden, über die er zwischen der Gebrauchsstellung und einer vom Boden angehobenen Stellung gekippt werden kann, wobei ein über das Gestell zu schwenkender Riegel, der an jeder Aussparung sitzt, die jeweilige Stange fest in der Aussparung hält. Jeder Riegel weist unter seinem Schwenkbolzen eine auf diesen Bolzen zentriert, kreisbogenförmige Öffnung auf, sowie in deren Mitte eine untere Aussparung, die geeignet ist, die entsprechende Stange aufzunehmen, wobei die Stange in einem der beiden Enden dieser Öffnung festsitzt, wenn der Sitz in Gebrauchsstellung oder angehobener Stellung steht, und gleichzeitig die Aussparung des Riegels und die des Gestells, die sich gegenüberliegen, passiert, wenn der Sitz sich in Schrägstellung zwischen den beiden vorgenannten Positionen befindet.

Die Druckschrift DE 197 35 364 A1 offenbart eine Fahrzeug-Sitzeinheit, die ein Sitzpolster aufweist, das auf einem Fahrzeugboden befestigbar ist. Die Fahrzeug-Sitzeinheit umfasst ein Paar erster Hakenbauteile, das entweder an einem vorderen oder an einem hinteren Abschnitt des Sitzpolsters oder einer diesen Abschnitten gegenüberliegenden Stelle des Fahrzeugbodens vorgesehen ist. Ferner umfasst die Fahrzeug-Sitzeinheit ein Paar zweiter Hakenbauteile, das jeweils an dem anderen Abschnitt des Sitzpolsters in einem gegenüberliegenden Verhältnis zu dem Paar erster Hakenbauteile vorgesehen ist. Zudem sind ein Paar Bügel angeordnet, die an dem Fahrzeugboden befestigt sind, um jeweils in und außer Eingriff mit dem Paar zweiter Hakenbauteile zu gelangen. Außerdem sind ein Paar Befestigungsvorrichtungen angeordnet, die an dem Fahrzeugboden oder dem vorderen oder hinteren Abschnitt des Sitzpolsters befestigt sind und die durch Betätigungen von Handgriffen die ersten Hakenbauteile jeweils in und außer Eingriff bringen. Die Befestigungsvorrichtungen weisen jeweils einen Stopperzapfen auf, der über an der Befestigungsvorrichtung drehbar gelagerte seitliche Arme schwenkbar ist, so dass der Stopperzapfen mit dem Paar erster Hakenbauteile in und außer Eingriff bringbar ist.

Die US 2005/0236883 A1 beschreibt einen klapp-und wickelbaren Fahrzeugsitz, der in seiner Normalposition an einer Karosserie verriegelt ist und zur Entnahme in eine Entnahmeposition entriegelbar ist. Unter Beibehaltung der karosserieseitigen Verrieglung kann der Fahrzeugsitz geklappt und/oder gewickelt werden. Weitere klapp- bzw. wickelbare Sitze mit Sitzbefestigungen, die den Fahrzeugsitz gegenüber der Karosserie abstützen bzw. ein Drehmoment aufnehmen, sind beispielsweise aus der US 2003/0193228 A1 und der US 5,498,051 A bekannt.

Der Erfindung liegt die Aufgabe zugrunde, eine Sitzbefestigung für einen Fahrzeugsitz zu schaffen, die es ermöglicht, dass der Fahrzeugsitz in einer verriegelten Normalposition sowie in einer geklappten Position (Klappposition) und/oder in einer gewickelten Position (Wickelposition) sicher lösbar verriegelt ist und durch eine Entriegelungsfunktion der Sitzbefestigung in eine Entnahmeposition bringbar ist.

Ausgangspunkt der Erfindung ist ein Fahrzeugsitz, umfassend einen Sitzfuss an dem ein drehbewegliches Sitzaufnahmeelement angeordnet ist. Das drehbewegliche Sitzaufnahmeelement steht zum Klappen um eine Klappachse des Fahrzeugsitzes unter Beibehaltung der Verriegelung des Fahrzeugsitzes aus der verriegelten Normalposition in die geklappte Position und/oder in die gewickelte Position mit einem Sitzteil des Fahrzeugsitzes in Verbindung.

Erfindungsgemäß ist vorgesehen, dass der Sitzfuss zwei in Klapprichtung hintereinander liegende Aufnahmen aufweist, die in verriegelter Normalposition des Fahrzeugsitzes unter Beibehaltung der karosserieseitigen Verriegelung des Fahrzeugsitzes in der geklappten Position und in der gewickelten Position in ein karosseriefestes Aufnahmeteil eingreifen. Dabei ist erfindungsgemäß vorgesehen, dass die Aufnahmen an dem Aufnahmeteil von einem an dem Sitzfuss angeordneten ersten Sicherungselement crashsicher verriegelt und spielfrei gehalten sind. In vorteilhafter Weise ist der Sitzfuss der Sitzbefestigung in +/-x-Richtung im Falle eines Heckcrashs oder eines Frontcrashs in dem Aufnahmeteil spielfrei gesichert.
Darüber hinaus zeichnet sich die Erfindung dadurch aus, dass der Sitzfuss ein zweites Sicherungselement aufweist, welches mit dem Sitzfuss und dem drehbeweglichen Sitzaufnahmeelement in Verbindung steht. Das zweite Sicherungselement überträgt ein Drehmoment von dem Sitzaufnahmeelement in den Sitzfuss sobald durch das Klappen des Fahrzeugsitzes ein Drehmoment auf das Sitzaufnahmeelement wirkt. Der Sitzfuss ist In vorteilhafter Weise durch die beiden in Klapprichtung hintereinander liegenden Aufnahmen in dem karosseriefesten Aufnahmeteil drehmomentsicher verriegelt. Das Drehmoment wird in vorteilhafter Weise bei der Klappung um die Klappachse A des Fahrzeugsitzes von seiner verriegelten Normalposition in die geklappte Position und/oder in die gewickelte Position von dem Sitzaufnahmeelement über das zweite Sicherungselement auf den Sitzfuss übertragen, wobei das zweite Sicherungselement bei der Klappung mitgenommen wird, und der Sitzfuss schließlich lösbar an dem zweiten Sicherungselement verriegelt und unter Aufnahme des Drehmomentes in dem Sitzfuss in einer Sicherungsposition drehmomentsicher gehalten wird.

Hinzu kommt in vorteilhafter Weise, dass sich das Sitzaufnahmeelement erfindungsgemäß in der verriegelten Normalposition auf dem ersten Sicherungselement abstützt, so dass die Entriegelung des Sitzfusses über das erste Sicherungselement unmöglich ist, solange sich das Sitzaufnahmeelement auf dem ersten Sicherungselement abstützt. Das bedeutet, solange sich der Fahrzeugsitz in seiner Normalposition befindet, stützt sich das Sitzaufnahmeelement auf dem ersten Sicherungselement ab, so dass es automatisch ohne einen separaten Eingriff durch einen Bediener zu einer Sicherung des den Sitzfuss verriegelnden ersten Sicherungselementes kommt. Hierdurch kommt es zu einer Sicherung des Sitzfußes in der Karosserie, die unabhängig von der Aufmerksamkeit eines Bedieners realisiert wird. Der beispielsweise den Fahrzeugsitz von einer geklappten Position oder von einer gewickelten Position in die karosserieseitig verriegelte Normalposition bringt.

Dabei ist es von Vorteil, dass durch die Klappung des Sitzaufnahmeelementes gleichzeitig die Entriegelung des Sitzfußes möglich ist, ohne dass ein Bediener eine bestimmte Bedienhandlung vornehmen muss. Allein durch die Klappung des Sitzaufnahmeelementes wird dafür gesorgt, dass sich das Sitzaufnahmeelement nicht mehr auf dem ersten Sicherungselement abstützt. Dadurch ist der Sitzfuss des Fahrzeugsitzes über das erste Sicherungselement entriegelbar und von dem karosseriefesten Aufnahmeteil lösbar, so dass der Fahrzeugsitz in eine Entnahmeposition bringbar ist, sobald der mit dem Sitzaufnahmeelement verbundene Fahrzeugsitz um die Klappachse aus seiner karosserieseitig verriegelten Normalposition unter Beibehaltung der karosserieseitigen Verriegelung in die geklappte Position und/oder in die gewickelte Position geklappt worden ist.

In bevorzugter Ausgestaltung der Erfindung ist das erste Sicherungselement ein Crashsicherungshebel, der drehbeweglich um eine Crashsicherungshebel-Schwenkachse schwenkbar an dem Sitzfuss angeordnet ist. Diese parallel zu dem Sitzfuss ausgewählte Anordnung des drehbeweglichen Crashsicherungshebels ist platzsparend und einfach in seiner Bedienung. Die detaillierte Ausgestaltung und Funktion des Crashsicherungshebels wird im Beschreibungsteil näher erläutert.

In bevorzugter Ausgestaltung der Erfindung ist das zweite Sicherungselement ein Wickelsicherungshebel, der drehbeweglich um eine Wickelsicherungshebel-Schwenkachse schwenkbar an dem Sitzfuss angeordnet ist. Für den Wickelsicherungshebel gilt ebenfalls, dass er parallel zu dem Sitzfuss platzsparend anordbar ist.

Somit ergibt sich eine Anordnung mit einem schmalen im Wesentlichen in Klapprichtung ausgerichteten in dieser Ausführungsvariante plattenartigen Sitzfuss, der beidseitig von dem Crashsicherungshebel und dem Wickelsicherungshebel flankiert wird.

Dem Crashsicherungshebel kommt die Funktion zu, den Sitzfuss in der Karosserie zu verriegeln, wobei die crashsichere Verriegelung in der Normalposition des Fahrzeugsitzes sowie in der geklappten Position des Fahrzeugsitzes als auch in der gewickelten Position des Fahrzeugsitzes bewirkt wird.

Dem Wickelsicherungshebel kommt die Funktion zu, den geklappten Fahrzeugsitz und/oder den gewickelten Fahrzeugsitz in seiner jeweiligen Position zu sichern. Dazu wird in vorteilhafter Weise das zweite Sicherungselement der Sitzbefestigung über einen quer zur Längserstreckung des Sitzaufnahmeelementes angeordneten Führungsbolzen von dem um die Klappachse klappenden Sitzaufnahmeelement mitgenommen. In der Sicherungsposition, in der das Sitzaufnahmeelement drehmomentsicher gehalten ist, greift der Führungsbolzen lösbar verrastet in eine Sicherungsaufnahme des zweiten Sicherungselementes ein. Auch diese Anordnung und Funktion ist besonders vorteilhaft, da sich die Sicherungsposition automatisch ergibt, ohne dass der Bediener durch eine separate Bedienhandlung eine entsprechende Verrastung vornehmen muss. Die Verrastung des Sicherungselementes und damit die drehmomentgesicherte Abstützung des Fahrzeugsitzes in der geklappten Position und/oder in der gewickelten Position erfolgt dadurch, dass der Führungsbolzen in einem dafür in dem zweiten Sicherungselement vorgesehenen Auge lösbar einrastet. Die detaillierte Ausgestaltung des Wickelsicherungshebels ist in der Beschreibung näher erläutert. Der Wickelsicherungshebel dient somit der drehmomentgesicherten Abstützung und Verrastung des Fahrzeugsitzes in der geklappten Position und in der gewickelten Position des Fahrzeugsitzes. Es versteht sich, dass das zweite Sicherungselement somit auch als Klappsicherungshebel bezeichnet werden kann.

In dem nachfolgenden Beispiel wird als Ausführungsbeispiel stellvertretend für einen Fahrzeugsitz eine Sitzbank erläutert, die nach vorn in die geklappte Position (Klappposition) und/oder in die gewickelte Position (Wickelposition) klappbar ist. Die Klappachse ist im Ausführungsbeispiel gleichzeitig die vordere Achse, die zwischen zwei Sitzbefestigungen der erfindungsgemäßen Art ausgebildet ist. Die hinteren Sitzbefestigungen können als einfache Verriegelungen ausgeführt sein. Es versteht sich, dass die Klappung wie im Ausgangsbeispiel beschrieben nicht zwingend nur nach vorn ausführbar sein muss. Solche Klappungen können in alle Raumrichtungen erfolgen, je nachdem wie die Anordnung der Sitzbefestigungen erfolgt.

Die Erfindung wird nachfolgend an einem Ausführungsbeispiel anhand der zugehörigen Zeichnungen erläutert. Es zeigen:
- Figur 1: eine perspektivische Unteransicht eines Fahrzeugsitzes, insbesondere einer Sitzbank in einer geklappten Position oder eine Wickelposition;
- Figur 2: eine perspektivische Darstellung schräg von oben auf die Sitzbefestigung in einer Einzeldarstellung in Normalposition, bei der sich ein nicht näher dargestellter Fahrzeugsitz, insbesondere die Sitzbank in einer normalen Sitzposition befindet;
- Figur 3 und 4: jeweils eine perspektivische Darstellung schräg von oben auf die Sitzbefestigung in einer Einzeldarstellung in Wickelposition, bei der sich ein nicht näher dargestellter Fahrzeugsitz, insbesondere die Sitzbank in der geklappten oder der Wickelposition gemäß Figur 1 befindet;
- Figur 5: eine perspektivische Darstellung schräg von oben auf die Sitzbefestigung in einer Entriegelungsposition zur Verlagerung des nicht näher dargestellten Fahrzeugsitzes, insbesondere der Sitzbank aus der geklappten Position oder der Wickelposition zurück in die Normalposition;
- Figur 6: eine perspektivische Darstellung schräg von oben auf die Sitzbefestigung, jedoch ausgehend von Figur 4 mit einem Blick auf die gegenüberliegende Seite der Sitzbefestigung; und
- Figur 7: eine perspektivische Darstellung schräg von oben auf die Sitzbefestigung, gemäß Figur 6, bei der sich die Sitzbefestigung in einer Entnahmeposition der Sitzbefestigung und damit des nicht näher dargestellten Fahrzeugsitzes beziehungsweise der Sitzbank.

Eine Ausführung der Erfindung wird nachfolgend in einem Ausführungsbeispiel erläutert. Für die Zwecke der Beschreibung soll die in Längsrichtung des Fahrzeuges liegende Richtung mit "x" bezeichnet werden. Mit "y" wird die Richtung in der Horizontalen X des Fahrzeuges quer zur x-Richtung bezeichnet und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

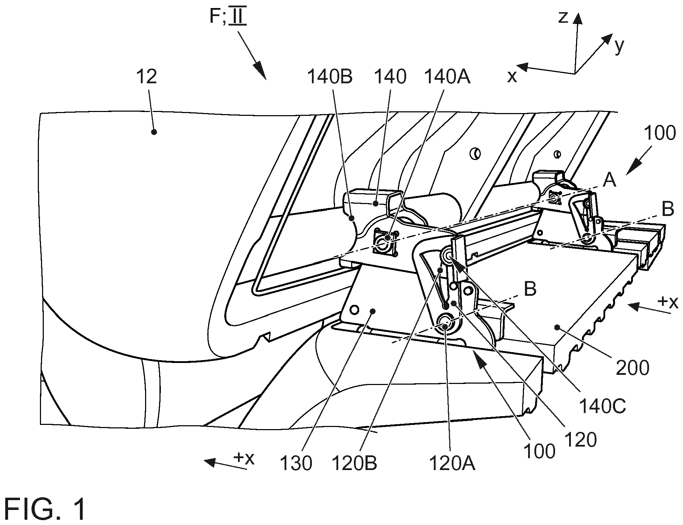

Die Figur 1 zeigt eine perspektivische Unteransicht eines Fahrzeugsitzes F in der Art einer Sitzbank. Die Sitzbank ist in Figur 1 in einer Wickelposition II angeordnet. In der Wickelposition II ist die nicht näher dargestellte Rückenlehne auf das Sitzteil 12 geklappt und das Sitzteil 12 ist auf seiner hinteren Seite entriegelt und um eine Klappachse A nach vorne in +x-Richtung geklappt, so dass die in der ungewickelten Sitzposition des Sitzteiles 12 vorliegende x-Erstreckung des Sitzteiles 12 in der Wickelposition II im Wesentlichen vertikal oder nahe einer Vertikalen Z angeordnet ist.

Zur Einstellung der Wickelposition II des Fahrzeugsitzes F und einer Normalposition I des Fahrzeugsitzes F dient die nachfolgend detailliert erläuterte drehmomentgesicherte klappbare Sitzbefestigungsvorrichtung 100, die nachfolgend kurz Sitzbefestigung genannt wird. Die Sitzbefestigung 100 ist derart aufgebaut, dass sie auch eine Entnahmeposition III des Fahrzeugsitzes F ermöglicht, die ebenfalls nachfolgend erläutert wird.

Als Normalposition I des Fahrzeugsitzes F wird diejenige Position des Fahrzeugsitzes F verstanden, bei der eine Person in der üblichen normalen Sitzposition auf dem Fahrzeugsitz F aufsitzt. Teilweise wird diese Normalposition auch als Fahrposition des Fahrzeugsitzes F bezeichnet.

Die Wickelposition II, bei der das Rückenlehnenteil auf das Sitzteil 12 geklappt ist, stellt eine bevorzugte Ausführungsform dar. Es versteht sich, dass die drehmomentgesicherte klappbare Sitzbefestigungsvorrichtung 100 auch für eine vertikal oder nahe einer Vertikalen Z geklappte Sitzbank einsetzbar ist, ohne das zuvor das Rückenlehnenteil auf das Sitzteil 12 geklappt worden ist. Diese Position der Sitzbank wird als Klappposition bezeichnet. Die Erläuterungen bezüglich der klappbaren Sitzbefestigung 100, die sich auf die Wickelposition II der Sitzbank beziehen, gelten auch für die Klappposition der Sitzbank. Der Unterschied besteht lediglich darin, ob die nicht dargestellte Rückenlehne auf das Sitzteil 12 geklappt (Wickelposition II) ist oder nicht (Klappposition).

Die Figur 1 zeigt eine Karosserie 200 und in oder an der Karosserie 200 zwei Bolzen 20 an denen ein zu der klappbaren Sitzbefestigung 100 gehörender Sitzfuss 130 angeordnet ist. Eine Sitzbank weist in der Regel zwei solcher Sitzbefestigungen 100 mit je einem Sitzfuss 130 auf. Es versteht sich, dass ein Fahrzeugsitz F auch nur eine klappbare Sitzbefestigung 100 oder mehr als zwei klappbare Sitzbefestigungen 100 aufweisen kann. Die nachfolgend beschriebene Art der klappbaren Sitzbefestigungen 100 werden in der Regel nahe des vorderen Bereiches des Sitzteiles 12 unterhalb der Sitzbank angeordnet, wo die Sitzbank um eine Klappachse A geklappt werden soll. Weitere Sitzbefestigungen, die zumeist im hinteren Bereich des Sitzteiles 12 unter Sitzbank angeordnet sind, dienen zumeist nur einer Ver- und Entriegelung der Sitzbank und sind deshalb anders aufgebaut.

Die Sitzbefestigung 100 umfasst ein zweites Sicherungselement 120, welches nachfolgend als Wickelsicherungshebel bezeichnet wird, da dieses Sicherungselement 120 die sich in Wickelposition II befindende Sitzbank dahingehend sichert, dass die Wickelposition II nicht ungewollt aufgehoben werden kann, wie noch erläutert wird.

Der Wickelsicherungshebel 120 umfasst wie Figur 1 zeigt ein Federelement 120B, welche eine stete Kraft auf den Wickelsicherungshebel 120 ausübt, wobei die Kraft so gewählt ist, dass der Wickelsicherungshebel 120 stets in +x-Richtung belastet ist, so dass der Wickelsicherungshebel 120 stets aus der in Figur 1 gezeigten vertikalen Position in eine horizontale Position drängt, wie noch erläutert wird. Das heißt, gemäß Figur 1 wirkt auf den Wickelsicherungshebel stets 120 eine Federkraft, die versucht den Wickelsicherungshebel 120 nach links entgegen der Uhrzeigerrichtung umzulegen. Der Wickelsicherungshebel 120 ist an dem Sitzfuss 130 auf einer Wickelsicherungshebel-Schwenkachse B drehbar gelagert. Das Lager trägt das Bezugszeichen 120A. Die genaue Anordnung des Federelementes 120B wird im Zusammenhang mit der weiteren Funktionsbeschreibung der Sitzbefestigung 100 noch erläutert.

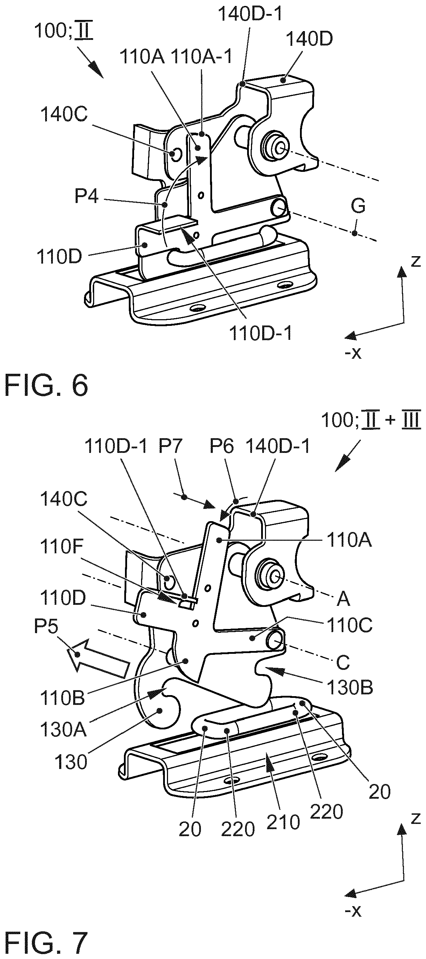

Die Sitzbefestigung 100 umfasst ferner ein in Figur 1 kaum sichtbares erstes Sicherungselement 110, welches nachfolgend als Crashsicherungshebel bezeichnet wird, da dieses Sicherungselement 110, die sich in Normalposition I und in Wickelposition II befindende Sitzbank im Crashfall dahingehend sichert, dass die im Crashfall in die Sitzbank in +/-x-Richtung eingeleiteten Crashkräfte nicht dazu führen können, dass die Sitzbank ungewollt aus ihrer karosserieseitigen Befestigung gelöst werden kann, wie noch erläutert wird. In Figur 1 ist nur ein als Bedienelement fungierendes viertes Hebelende 110D des Crashsicherungshebels 110 in der Art einer Abstellung 110D-1 sichtbar. Der Crashsicherungshebel 110 mit seinen Hebelenden 110A, 110B, 110C und 110D ist in Figur 6 und 7 vollständig sichtbar.

Die Sitzbefestigung 100 umfasst ferner ein Aufnahmeelement 140. Das Aufnahmeelement 140 ist drehbar an dem Sitzfuss 130 gelagert. Das Lager trägt das Bezugszeichen 140A. Über dieses Lager 140A ist das Sitzteil 12 um die Klappachse A in +x-Richtung oder entgegen in -x-Richtung klappbar. Befindet sich das Sitzaufnahmeelement 140 in einer horizontalen Position (Figur 1) ist das Sitzteil 12 nach vorn geklappt. Die Sitzbank, beziehungsweise allgemein ein Fahrzeugsitz F befindet sich in der geklappten Position oder der Wickelposition II.

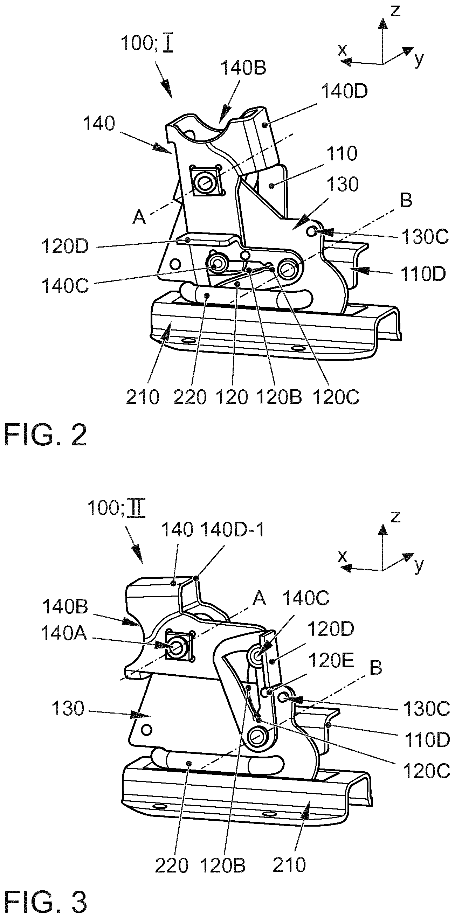

Befindet sich das Sitzaufnahmeelement 140 in einer im Wesentlichen vertikalen Position (Figur 2), ist das Sitzteil 12 nach hinten geklappt. Die Sitzbank, beziehungsweise allgemein ein Fahrzeugsitz F befindet sich dann in Normalposition I.

Figur 1 zeigt, dass das Sitzaufnahmeelement 140 eine Aufnahme 140B aufweist. Die Aufnahme 140B ist im Ausführungsbeispiel halbrund und steht in fester Verbindung zu einem im Ausführungsbeispiel zylindrischen Unterrohr der Unterkonstruktion der Sitzbank. Das Unterrohr ist vorzugsweise im Bereich der Aufnahme 140B mit dem Sitzaufnahmeelement 140 verschweißt.

Figur 2 zeigt die Sitzbefestigung 100 in einer Einzeldarstellung, wobei sich das Sitzteil 12 in der Normalposition I befindet, wie durch das im Wesentlichen vertikal stehende Sitzaufnahmeelement 140 deutlich ist.

In einer in Figur 1 nicht dargestellten Ausführungsvariante, die in den nachfolgenden Figuren 2 bis 7 ergänzend dargestellt ist, sitzt die Sitzbefestigung 100 auf einem bodenseitigen Aufnahmeteil 210, auf der ein Aufnahmesegment 220 sitzt.

Das Aufnahmesegment 220 umfasst zwei quer zur Fahrtrichtung x liegende Bereiche, die den bereits beschriebenen Bolzen 20 entsprechen und an denen der Sitzfuss 130 festgelegt und gesichert ist, wie noch erläutert wird. Zur Sicherung des Sitzfusses 130 an den Bolzen 20, dient der im Hintergrund der Figur 2 sichtbare Crashsicherungshebel 110 mit seinem Bedienelement 110D.

Wie Figur 1 zeigen auch die Figuren 2 bis 5 einen Führungsbolzen 140C. Der Führungsbolzen 140C liegt der Aufnahme 140B des Sitzaufnahmeelementes 140 in Längserstreckung des Sitzaufnahmeelementes 140 gesehen gegenüber. Die Längsachse des Führungsbolzens 140C verläuft in Einbausituation der Sitzbefestigung 100 in y-Richtung, quer zu Längserstreckung des Sitzaufnahmeelementes 140, wobei der Führungsbolzens 140C fest mit dem Sitzaufnahmeelement 140 verbunden ist und eine Führung für den Wickelsicherungshebel 120 bildet. Der Führungsbolzen 140C weist einen Bolzenkopf auf, der von der Fläche des Sitzaufnahmeelementes 140 beabstandet ist. Dadurch bildet sich zwischen der Rückseite des Bolzenkopfes und der Fläche des Sitzaufnahmeelementes 140 ein Spalt.

Wie Figur 2 zeigt, ist der Wickelsicherungshebel 120 in der Normalposition des Sitzteiles 12 horizontal angeordnet, wobei der Wickelsicherungshebel 120 eine mit einem geschlossen Karabinerhaken vergleichbare Form aufweist. Der geschlossene Karabinerhaken ist dabei aus einem Flachmaterial ausgebildet, so dass das Flachmaterial im Bereich der Innenkontur des Karabinerhakens in dem Spalt des Sitzaufnahmeelementes 140 einliegt. Der Wickelsicherungshebel 120 ist dadurch in y-Richtung gesichert und stabilisiert, so dass bei den Verstellbewegungen der Sitzbefestigung 100 ein Geradeauslauf der Bauteile 120, 130, 140 zueinander erreicht wird.

Der Bolzenkopf des Führungsbolzens 140C umfasst ferner eine nicht näher dargestellte Aufnahme- beziehungsweise Anlagestelle für das freie Ende des Federelementes 120B. Das unfreie Ende des Federelementes 120B ist in einem Auge 120C des Wickelsicherungshebels 120 festgelegt, insbesondere eingepresst. Das Federelement 120B ist derart in dem Auge 120C befestigt, dass das freie Ende unter leichter Vorspannung an der Aufnahme- beziehungsweise Anlagestelle anliegt, wodurch die bereits erläuterte Wirkrichtung der Federkraft erzeugt, die gemäß Figur 1 stets versucht den Wickelsicherungshebel 120 nach links entgegen der Uhrzeigerrichtung umzulegen. In Figur 2 ist der Wickelsicherungshebel 120 entsprechend um 90° in die Horizontale X umgelegt.

Der Wickelsicherungshebel 120 umfasst außerdem eine im Ausführungsbeispiel um 90° in +/y-Richtung umgebogene Abstellung 120D, die zur Bedienung des Wickelsicherungshebels 120 als Bedienelement ausgebildet ist, wie noch erläutert wird.

Die weiteren Figuren dienen insbesondere der Erläuterung der Funktionsweise, wobei für gleiche Bauteile gleiche Bezugszeichen verwendet werden, wobei nicht in jeder Figur erneut alle bereits vorgestellten Bauteile anhand der Bezugszeichen nochmals erläutert werden.

Die Figur 3 zeigt analog zu Figur 1 die Sitzbefestigung 100 in Wickelsicherung II in einer Einzeldarstellung ohne die Sitzbank. Seitlich auf der Fläche des Sitzfusses 130 ist eine Kugelkalotte 130C ausgebildet, die von der Fläche des Sitzfusses 130 absteht. Auf der Innenfläche des Wickelsicherungshebels 120 ist eine mit der Form der Kugelkalotte 130C korrespondierende Vertiefung 120E ausgebildet.

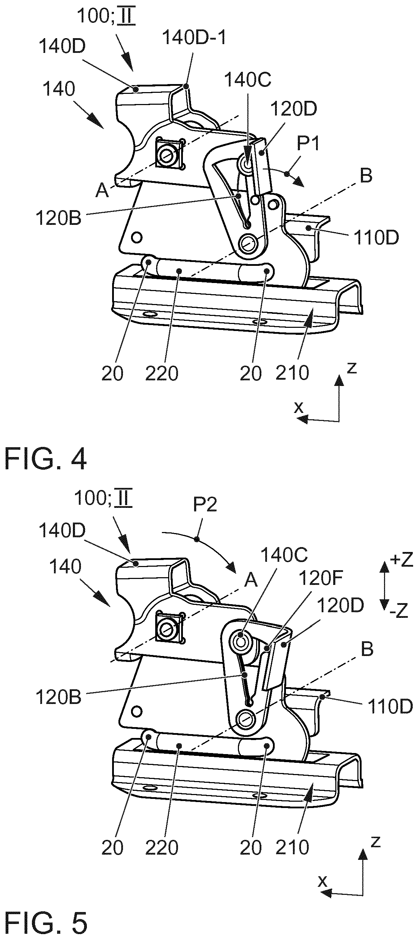

In Figur 3 befindet sich der Wickelsicherungshebel 120 in seiner Sicherungsposition, bei der die Vertiefung 120E noch nicht auf der Kugelkalotte 130C liegt. In der Sicherungsposition greift der Führungsbolzen 140C in eine Sicherungsaufnahme 120F ein, die in Figur 5 besser sichtbar ist.

Dabei hinterschneidet die Innenkontur des Wickelsicherungshebels 120 den Bolzenkopf des Führungsbolzens 140C. Das heißt, wie erläutert liegt das Flachmaterial des Wickelsicherungshebels 120 im Bereich der Innenkontur des Karabinerhakens in dem Spalt zwischen dem Sitzaufnahmeelement 140 und der Innenfläche des Bolzenkopfes des Führungsbolzens 140C.

Die in Figur 5 am besten sichtbare Sicherungsaufnahme 120F weist eine obere Flanke und eine untere Flanke auf, an der der Führungsbolzen 140C in Sicherungsposition des Wickelsicherungshebels 120 anliegt. Dabei ist die untere Flanke zusätzlich leicht in -z-Richtung vertieft, so dass der Führungsbolzen 140C in der Sicherungsaufnahme 120F verrastet.

Diese Sicherungsposition wird durch das Federelement 120B gesichert, welches den Wickelsicherungshebel 120 stets gegen die Uhrzeigerrichtung drückt und somit den Führungsbolzen 140C in der Sicherungsaufnahme 120F hält.

In der Sicherungsposition werden in +/-z-Richtung wirkende Vertikalkräfte an der oberen und unteren Flanke der Sicherungsaufnahme 120F aufgenommen, wobei in +/-x-Richtung wirkende Horizontalkräfte von dem im Aufnahmesegment 220 befestigten Sitzfuss 130 aufgenommen werden.

Es wird deutlich, dass das von der in Wickelposition II auf die Sitzbefestigung 100 wirkende Drehmoment durch die beiden Bolzen 20 aufgenommen wird, wobei diese Position automatisch durch den Wickelsicherungshebel 120 gesichert wird. Wie erwähnt, umfasst das Aufnahmesegment 220 zwei quer zur Fahrtrichtung x liegende Bereiche. Diese Bereiche bilden die beiden beschriebenen Bolzen 20, an denen der Sitzfuss drehmomentgestützt befestigt ist.

Die Sitzbefestigung 100 stützt somit die Sitzbank in geklappter Position beziehungsweise Wickelposition II ab und sichert die geklappte Position beziehungsweise die Wickelposition II automatisch, so dass eine drehmomentgestützte Sitzbefestigung 100 mit automatischer Absicherung über den Wickelsicherungshebel 120 erreicht ist.

Der Automatismus erfolgt, da der Wickelsicherungshebel 120 beim Klappen der Sitzbank nach vorn, vergleiche Figur 2 und Figur 3 automatisch aus der Horizontalen X, gemäß der Figur 2 in die Vertikale Z, gemäß der Figur 3 mitgenommen wird und dort wie erläutert in der Sicherungsaufnahme 120F verrastet.

In Figur 4 wird anhand des Pfeiles P1 dargestellt, dass eine Betätigung des Wickelsicherungshebels 120 notwendig ist, um die Sicherungsposition des Wickelsicherungshebels 120 aufzuheben. Der Wickelsicherungshebel 120 wird dazu um die Wickelsicherungshebel-Schwenkachse B in Uhrzeigerrichtung verschwenkt. Diese Schwenkbewegung findet gegen die Kraft des Federelementes 120B statt.

Die Figur 5 zeigt den Wickelsicherungshebel 120 in der Entriegelungsposition, so dass die mehrfach erwähnte Sicherungsaufnahme 120F sichtbar wird. Der Führungsbolzen 140C läuft dabei an der oberen Flanke der Innenkontur entlang, solange bis die Vertiefung 120E auf der Kugelkalotte 130C zur Anlage kommt. Dadurch wird der Wickelsicherungshebel 120 in der Entriegelungsposition in einer Fixierungsposition fixiert. Es wird deutlich, dass die Haltekraft der Kugelkalotte 120C an der Vertiefung 120E größer ist, als die auf den Wickelsicherungshebel 120 wirkende Kraft des Federelementes 120B.

Dadurch kann der Bediener nunmehr die Sitzbank aus der Wickelposition II zurück in die Normalposition I klappen, da die Sicherungsposition aufgehoben ist.

Die Klappbewegung des Sitzaufnahmeelementes 140 ist in Figur 5 anhand des Pfeiles P2 verdeutlicht und findet um die Klappachse A statt. Durch die Klappbewegung um im Wesentlichen 90° wird auch der Führungsbolzen 140C auf einer entsprechenden Kurvenbahn in die in Figur 1 dargestellte Position geschwenkt. Der Führungsbolzen 140C läuft dabei in entgegen gesetzter Richtung an der oberen Flanke der Innenkontur des Wickelsicherungshebels 120 in Richtung der Sicherungsaufnahme entlang, jedoch ohne das der Führungsbolzen 140C in der horizontalen Lage des Wickelsicherungshebels 120 in die Sicherungsaufnahme 120F einrastet. Die Haltekraft zwischen der Kugelkalotte 130C und der Vertiefung 120E wird durch die Kraft der Klappbewegung der Sitzbank überwunden, so dass sich der Wickelsicherungshebel 120 aus der Fixierungsposition löst und schließlich in die horizontale Lage gemäß Figur 2 gelangt.

In der Normalposition I ist die Befestigung des Sitzfusses 130 in dem Aufnahmesegment 220 durch den Crashsicherungshebel 110 gesichert.

Wie Figur 2 zeigt, bildet das Sitzaufnahmeelement 140 eine Abwinkelung 140D, die eine in der Normalposition I in Richtung des Crashsicherungshebels 110 weisende Stirnseite 140D-1 aufweist. Mit der Fläche der Stirnseite 140D-1 stützt sich die Abwickelung 140D auf der Stirnseite 110A-1 eines in vertikaler Richtung z stehenden freien ersten Hebelendes 110A des Crashsicherungshebels 110 ab, so dass eine horizontale Verlagerung des Sitzfusses 130 gegenüber dem Aufnahmesegment 220 nicht möglich ist. Diese Position ist in Figur 2 dargestellt.

Der beschriebene Crashsicherungshebel 110 ist in Figur 6 und Figur 7 sichtbar, da die Figuren 6 und 7 einen Blick auf die gegenüberliegende Seite der Sitzbefestigung 100 ermöglichen.

In den beiden Figuren 6 und 7 wird deutlich, dass der Crashsicherungshebel 110 das beschriebene erste freie Hebelende 110A aufweist und schwenkbeweglich über eine Crashsicherungshebel-Schwenkachse C mit dem Sitzfuss 130 verbunden ist. Das Lager des Crashsicherungshebels 110 trägt das Bezugszeichen 110E.

Wie in den Figuren 6 und 7 deutlich wird, bildet der Sitzfuss 130 eine vordere Sitzfussaufnahme 130A und eine hintere Sitzfussaufnahme 130B deren Kontur mit der Außenkontur der Bolzen 20 übereinstimmt.

In Figur 6 ist der Sitzfuss 130 über die Sitzfussaufnahme 130A und 130B in das Aufnahmesegment 220 eingesetzt und ein nach unten weisender Sicherungssteg als zweites freies Hebelende 110B des Crashsicherungshebels 110 vermeidet in der Aufnahmeposition der Sitzbank in dem Aufnahmesegment 220, dass der Sitzfuss 130 gegenüber dem Aufnahmesegment 220 in horizontaler Richtung +/-x verschiebbar ist.

Wie zuvor erläutert, kann der Sicherungssteg 110B nicht aus dem Aufnahmesegment 220 herausschwenken, solange die Stirnseite 140D-1 der Abwinkelung 140D des Sitzaufnahmeelementes 140 auf die Stirnseite 110A-1 des ersten freien Hebelendes 110A-1 des Crashsicherungshebels 110 drückt, wie in Figur 2 dargestellt ist.

Andererseits kann durch eine Verschwenkung des Crashsicherungshebels 110 um die Crashsicherungshebel-Schwenkachse C eine Entnahme der Sitzbank erfolgen, sobald sich das Sitzaufnahmeelement 140 in Wickelposition II befindet, wie in Figur 6 dargestellt ist.

In dieser Wickelposition II ist das erste freie Hebelende 110A des Crashsicherungshebels 110 frei, so dass über die Abstellung 110D-1 am vierten Hebelende 110D des Crashsicherungshebels 110, die als Bedienelement dient, eine Verschwenkung um die Crashsicherungshebel-Schwenkachse C möglich ist, wie anhand des Pfeiles P4 in Figur 6 beziehungsweise des Pfeiles P7 in Figur 7 verdeutlicht wird. Von dem vierten freien Hebelende 110D verläuft ein drittes Hebelende 110C zu der Crashsicherungshebel-Schwenkachse C.

Sobald der Crashsicherungshebel 110 um die Crashsicherungshebel-Schwenkachse C geschwenkt worden ist, kann der Sitzfuss 130 gemäß dem Pfeil P5 in Figur 7 aus dem Aufnahmesegment 220 entnommen werden.

In der Entnahmeposition ist der Crashsicherungshebel 110 durch mindestens eine nicht sichtbare Kugelkalotte im Sitzfuss 130, welche zu dem Crashsicherungshebel 110 gerichtet ist und aus der Fläche des Sitzfusses 130 herausragt an mindestens einer Vertiefung 110F innerhalb des Crashsicherungshebels 110 in seiner entsicherten Position gehalten.

Der Pfeil P6 in Figur 7 verdeutlicht, dass der Crashsicherungshebel 110, nachdem der Sitzfuss 130 wieder in das Aufnahmesegment 220 eingesetzt worden ist und die Sitzfussaufnahmen 130A und 130B in die Bolzen 20 eingreifen, automatisch über die Stirnseite 140D-1 der Abwinkelung 140D des Sitzaufnahmeelementes 140 in die verriegelnde Position geschwenkt wird, sobald so die Sitzbank von der geklappten Position beziehungsweise der Wickelposition II wieder in die Normalposition I verschwenkt wird, so dass durch die Klappung in die Normalposition I eine automatische Sicherung gegen eine Verschiebung des Sitzfusses 130 erfolgt.

### Bezugszeichenliste

- 12: Sitzteil
- 20: Bolzen
- 100: Sitzbefestigung

- 110: erstes Sicherungselement; Crashsicherungshebel
- 110A: erstes Hebelende
- 110A-1: Stirnseite
- 110B: zweites Hebelende
- 110C: drittes Hebelende
- 110D: viertes Hebelende
- 110D-1: Abstellung; Bedienelement
- 110E: Lager des Crashsicherungshebels
- 110F: Vertiefung

- 120: zweites Sicherungselement; Wickelsicherungshebel
- 120A: Lager
- 120B: Federelement
- 120C: Auge
- 120D: Abstellung; Bedienelement
- 120E: Vertiefung
- 120F: Sicherungsaufnahme
- 130: Sitzfuss
- 130A: vordere Sitzfussaufnahme
- 130B: hintere Sitzfussaufnahme
- 130C: Kugelkalotte
- 140: Sitzaufnahmeelement
- 140A: Lager
- 140B: Aufnahme
- 140C: Führungsbolzen

- 200: Karosserie
- 210: Aufnahmeteil
- 220: Aufnahmesegment

- I: Normalposition
- II: Wickelposition
- III: Entnahmeposition

- A: Klappachse
- B: Wickelsicherungshebel-Schwenkachse
- C: Crashsicherungshebel-Schwenkachse
- F: Fahrzeugsitz

- P1: Pfeil
- P2: Pfeil
- P3: Pfeil
- P4: Pfeil
- P5: Pfeil
- P6: Pfeil
- P7: Pfeil

- x: Richtung
- y: Richtung
- z: Richtung
- X: Horizontale
- Z: Vertikale

## Patentansprüche

1. Fahrzeugsitz (F) mit mindestens einer karosserieseitigen Sitzbefestigung (100), die den Fahrzeugsitz (F) in seiner Normalposition (I) crashsicher an einer Karosserie (200) verriegelt und die den Fahrzeugsitz (F) zur Entnahme in eine Entnahmeposition (III) gegenüber der Karosserie (200) entriegelt, und die unter Beibehaltung der karosserieseitigen Verriegelung ein Klappen des Fahrzeugsitzes (F) in eine geklappte Position und/oder bei einer vorhergehenden Klappung einer Rückenlehne auf ein Sitzteil (12) in eine gewickelte Position (II) ermöglicht, in der/denen die karosseriefeste Sitzbefestigung (100) ein Drehmoment aufnimmt und den Fahrzeugsitz (F) gegenüber der Karosserie (200) abstützt, umfassend einen Sitzfuss (130) an dem ein drehbewegliches Sitzaufnahmeelement (140) angeordnet ist, welches zum Klappen um eine Klappachse (A) des Fahrzeugsitzes (F) unter Beibehaltung der karosserieseitigen Verriegelung des Fahrzeugsitzes (F) aus der verriegelten Normalposition (I) in die geklappte Position und/oder in die gewickelte Position (II) mit einem Sitzteil (12) des Fahrzeugsitzes (F) in Verbindung steht,
wobei der Sitzfuss (130) zwei in Klapprichtung hintereinander liegende Aufnahmen (130A, 130B) aufweist, die in karosserieseitig verriegelter Normalposition (I) und unter Beibehaltung der karosserieseitigen Verriegelung in der geklappten Position und in der gewickelten Position (II) in ein karosseriefestes Aufnahmeteil (220) eingreifen, und die Aufnahmen (130A, 130B) an dem Aufnahmeteil (220) von einem an dem Sitzfuss (130) angeordneten ersten Sicherungselement (110) crashsicher verriegelt und spielfrei gehalten sind, und
der Sitzfuss (130) ein zweites Sicherungselement (120) aufweist, welches mit dem Sitzfuss (130) und mit dem drehbeweglichen Sitzaufnahmeelement (140) in Verbindung steht, welches bei der Klappung des Fahrzeugsitzes (F) um die Klappachse (A) von seiner karosserieseitig verriegelten Normalposition (I) unter Beibehaltung der karosserieseitigen Verriegelung in die geklappte Position und/oder in die gewickelte Position (II) von dem um die Klappachse (A) klappenden Sitzaufnahmeelement (140) mitgenommen wird, so dass das Sitzaufnahmeelement (140) nach der Klappung unter Einleitung eines Drehmomentes in den Sitzfuss (130) lösbar an dem zweiten Sicherungselement (120) verriegelt und unter Aufnahme des Drehmomentes in dem Sitzfuss (130) in einer Sicherungsposition drehmomentsicher gehalten ist,
**dadurch gekennzeichnet, dass** sich das Sitzaufnahmeelement (140) in der karosserieseitig verriegelten Normalposition (I) auf dem ersten Sicherungselement (110) abstützt, so dass die Entriegelung des Sitzfusses (130) über das erste Sicherungselement (110) unmöglich ist, und wobei durch die Klappung des Sitzaufnahmeelementes (140) gleichzeitig die karosserieseitige Entriegelung des Sitzfusses (130) über das erste Sicherungselement (110) möglich ist.

2. Sitzbefestigung nach Anspruch 1, **dadurch gekennzeichnet, dass** der Sitzfuss (130) durch karosserieseitige Entriegelung des Sitzfusses (130) über das erste Sicherungselement (110) von dem karosseriefesten Aufnahmeteil (220) lösbar ist, wodurch der Fahrzeugsitz (F) in eine Entnahmeposition (III) bringbar ist, sobald der mit dem Sitzaufnahmeelement (140) verbundene Fahrzeugsitz (F) um die Klappachse (A) von seiner karosserieseitig verriegelten Normalposition (I) unter Beibehaltung der karosserieseitigen Verriegelung in die geklappte Position und/oder in die gewickelte Position (II) geklappt worden ist, so dass sich das bei der Klappung mitgenommene Sitzaufnahmeelement (140) nicht mehr auf dem ersten Sicherungselement (110) abstützt.

3. Sitzbefestigung nach Anspruch 1, **dadurch gekennzeichnet, dass** das erste Sicherungselement (110) ein Crashsicherungshebel ist, der drehbeweglich um eine Crashsicherungshebel-Schwenkachse (C) schwenkbar an dem Sitzfuss (130) angeordnet ist.

4. Sitzbefestigung nach Anspruch 1, **dadurch gekennzeichnet, dass** das zweite Sicherungselement (120) ein Wickelsicherungshebel ist, der drehbeweglich um eine Wickelsicherungshebel-Schwenkachse (B) schwenkbar an dem Sitzfuss (130) angeordnet ist.

5. Sitzbefestigung nach Anspruch 1, **dadurch gekennzeichnet, dass** das zweite Sicherungselement (120) über einen quer zu Längserstreckung des Sitzaufnahmeelementes (140) angeordneten Führungsbolzen (140C) von dem um die Klappachse (A) klappenden Sitzaufnahmeelement (140) mitgenommen wird und in der Sicherungsposition, in der das Sitzaufnahmeelement (140) drehmomentsicher gehalten ist, der Führungsbolzen (140C) lösbar verrastet in eine Sicherungsaufnahme (120F) des zweiten Sicherungselementes (120) eingreift.

## Claims

1. Vehicle seat (F) with at least one body-side seat attachment (100) which locks the vehicle seat (F) in the normal position (I) thereof to a body (200) in a crash-secure manner and unlocks the vehicle seat (F) for removal into a removal position (III) in relation to the body (200), and which, while maintaining the body-side locking, permits folding of the vehicle seat (F) into a folded position and/or, in the event of previous folding of a backrest onto a seat part (12), into a rolled-over position (II), in which position/positions the body-mounted seat attachment (100) absorbs a torque and supports the vehicle seat (F) in relation to the body (200), comprising a seat foot (130) on which a rotatable seat-mounting element (140) is arranged which, for folding about a folding axis (A) of the vehicle seat (F) from the locked normal position (I) into the folded position and/or into the rolled-over position (II), while maintaining the body-side locking of the vehicle seat (F), is connected to a seat part (12) of the vehicle seat (F),
wherein the seat foot (130) has two mountings (130A, 130B) which lie one behind the other in the folding direction and, in the normal position (I) locked on the body side and while maintaining the body-side locking in the folded position and in the rolled-over position (II), engage in a body-mounted mounting part (220), and the mountings (130A, 130B) are locked in a crash-secure manner to, and held without play on, the mounting part (220) by a first securing element (110) arranged on the seat foot (130), and
the seat foot (130) has a second securing element (120) which is connected to the seat foot (130) and to the rotatable seat-mounting element (140), which securing element, during the folding of the vehicle seat (F) about the folding axis (A) from the normal position (I) thereof locked on the body side, while maintaining the body-side locking, into the folded position and/or into the rolled-over position (II), is carried along by the seat-mounting element (140), which folds about the folding axis (A), and therefore, after the folding and with torque being introduced into the seat foot (130), the seat-mounting element (140) is locked releasably to the second securing element (120) and, with the torque being absorbed in the seat foot (130), is held in a securing position in a manner secure against torque,
**characterized in that**, in the normal position (I) locked on the body side, the seat-mounting element (140) is supported on the first securing element (110), and therefore unlocking of the seat foot (130) via the first securing element (110) is impossible, and wherein, by means of the folding of the seat-mounting element (140), the body-side unlocking of the seat foot (130) via the first securing element (110) is possible at the same time.

2. Seat attachment according to Claim 1, **characterized in that** the seat foot (130) can be released from the body-mounted mounting part (220) by means of the body-side unlocking of the seat foot (130) via the first securing element (110), as a result of which the vehicle seat (F) can be brought into a removal position (III) as soon as the vehicle seat (F) which is connected to the seat-mounting element (140) has been folded about the folding axis (A) from the normal position (I) thereof locked on the body side, while maintaining the body-side locking, into the folded position and/or into the rolled-over position (II), and therefore the seat-mounting element (140) which is carried along during the folding is no longer supported on the first securing element (110) .

3. Seat attachment according to Claim 1, **characterized in that** the first securing element (110) is a crash-securing lever which is arranged rotatably on the seat foot (130) so as to be pivotable about a crash-securing-lever pivot axis (C).

4. Seat attachment according to Claim 1, **characterized in that** the second securing element (120) is a rollover-securing lever which is arranged rotatably on the seat foot (130) so as to be pivotable about a rollover-securing-lever pivot axis (B).

5. Seat attachment according to Claim 1, **characterized in that** the second securing element (120) is carried along via a guide bolt (140C), which is arranged transversely with respect to the longitudinal extent of the seat-mounting element (140), by the seat-mounting element (140), which folds about the folding axis (A), and, in the securing position in which the seat-mounting element (140) is held in a manner secure against torque, the guide bolt (140C) engages in a releasably latched manner in a securing mounting (120F) of the second securing element (120) .

## Revendications

1. Siège de véhicule (F) comprenant au moins une fixation de siège du côté de la carrosserie (100) qui verrouille le siège de véhicule (F), dans sa position normale (I) de manière protégée contre une collision, à une carrosserie (200), et qui déverrouille le siège de véhicule (F) pour l'enlever dans une position d'enlèvement (III) par rapport à la carrosserie (200), et qui permet, en conservant le verrouillage du côté de la carrosserie, un rabattement du siège de véhicule (F) dans une position rabattue et/ou, dans le cas d'un rabattement préalable d'un dossier sur une partie de siège (12), dans une position enroulée (II), dans laquelle/lesquelles position(s), la fixation de siège (100) fixée à la carrosserie reçoit un couple et supporte le siège de véhicule (F) par rapport à la carrosserie (200), comprenant une base de siège (130) sur laquelle est disposé un élément de réception de siège (140) mobile en rotation, qui est en liaison avec une partie de siège (12) du siège de véhicule (F) pour le rabattement autour d'un axe de rabattement (A) du siège de véhicule (F), en conservant le verrouillage du côté de la carrosserie du siège de véhicule (F), de la position normale verrouillée (I) dans la position rabattue et/ou dans la position enroulée (II),
la base de siège (130) présentant deux logements (130A, 130B) disposés l'un derrière l'autre dans la direction de rabattement, qui, dans la position normale verrouillée du côté de la carrosserie (I) et en conservant le verrouillage du côté de la carrosserie dans la position rabattue et dans la position enroulée (II), s'engagent dans une partie de réception fixée à la carrosserie (220), et les logements (130A, 130B) étant verrouillés de manière protégée contre une collision et étant maintenus sans jeu sur la partie de réception (220) par un premier élément de sécurisation (110) disposé sur la base de siège (130), et
la base de siège (130) présentant un deuxième élément de sécurisation (120) qui est en liaison avec la base de siège (130) et avec l'élément de réception de siège (140) mobile en rotation qui est entraîné par l'élément de réception de siège (140) se rabattant autour de l'axe de rabattement (A) lors du rabattement du siège de véhicule (F) autour de l'axe de rabattement (A) de sa position normale verrouillée du côté de la carrosserie (I) en conservant le verrouillage du côté de la carrosserie dans la position rabattue et/ou dans la position enroulée (II), de telle sorte que l'élément de réception de siège (140), après le rabattement, en introduisant un couple dans la base de siège (130), soit verrouillé de manière amovible au deuxième élément de sécurisation (120) et soit maintenu de manière sécurisée en termes de couple dans une position de sécurisation en recevant le couple dans la base de siège (130), **caractérisé en ce que** l'élément de réception de siège (140) s'appuie dans la position normale verrouillée du côté de la carrosserie (I) sur le premier élément de sécurisation (110), de telle sorte que le déverrouillage de la base de siège (130) ne soit pas possible par le biais du premier élément de sécurisation (110), et le déverrouillage du côté de la carrosserie de la base de siège (130) étant simultanément possible par le biais du premier élément de sécurisation (110) par rabattement de l'élément de réception de siège (140).

2. Fixation de siège selon la revendication 1, **caractérisée en ce que** la base de siège (130) peut être détachée de la partie de réception fixée à la carrosserie (220) par un déverrouillage du côté de la carrosserie de la base de siège (130) par le biais du premier élément de sécurisation (110), de sorte que le siège de véhicule (F) puisse être amené dans une position d'enlèvement (III) dès que le siège de véhicule (F) raccordé à l'élément de réception de siège (140) a été rabattu autour de l'axe de rabattement (A) de sa position normale verrouillée du côté de la carrosserie (I) en conservant le verrouillage du côté de la carrosserie dans la position rabattue et/ou dans la position enroulée (II), de telle sorte que l'élément de réception de siège (140) entraîné lors du rabattement ne s'appuie plus sur le premier élément de sécurisation (110).

3. Fixation de siège selon la revendication 1, **caractérisée en ce que** le premier élément de sécurisation (110) est un levier de sécurisation anti-collision qui est disposé de manière mobile en rotation de manière à pouvoir pivoter autour d'un axe de pivotement de levier de sécurisation anti-collision (C) sur la base de siège (130).

4. Fixation de siège selon la revendication 1, **caractérisée en ce que** le deuxième élément de sécurisation (120) est un levier de sécurisation d'enroulement qui est disposé de manière mobile en rotation de manière à pouvoir pivoter autour d'un axe de pivotement de levier de sécurisation d'enroulement (B) sur la base de siège (130).

5. Fixation de siège selon la revendication 1, **caractérisée en ce que** le deuxième élément de sécurisation (120) est entraîné, par le biais d'un boulon de guidage (140C) disposé transversalement à l'étendue longitudinale de l'élément de réception de siège (140), par l'élément de réception de siège (140) se rabattant autour de l'axe de rabattement (A) et dans la position de sécurisation, dans laquelle l'élément de réception de siège (140) est retenu de manière sécurisée en termes de couple, le boulon de guidage (140C) s'engage de manière encliquetée de manière amovible dans un logement de sécurisation (120F) du deuxième élément de sécurisation (120).
